# EUROPEAN PATENT APPLICATION

(11) **EP 1 624 121 A2**
(43) Date of publication of application: **08.02.2006**
(21) Application number: 05106398.0
(22) Date of filing: 13.07.2005
(51) Int. Cl.: E04B 1/80, B32B 27/32, E04C 2/32

(54) **Insulation structures and process for producing them**

(30) Priority: 05.08.2004 IL 16337004
(71) Applicant: Polyon Barkai Industries (1993) Ltd., 37860 Kibbutz Barkai (IL)
(72) Inventor: Yanai, Gil, 45845, Kibbutz Nir-Eliyahu (IL)
(74) Representative: Ponti Sales, Adelaida

(57) **Abstract**

The present invention relates to an improved reflective bubble film insulating structures and a process for producing them.

The present invention consists in a reflective bubble film insulating structure in which at least one low emissivity surface is directly or indirectly attached to the open cell side of a bubble shaped layer resulting in airtight cells.

The resulting structure obtainable according to the process of the invention comprises many individually airtight cells, each one being delimited by a low emissivity surface which thus remains protected from dust and moisture.

The reflective bubble film insulating structure according to the present invention may be used not only as an insulating structure as such but also for all structures comprising insulating structures.

## Description

### Field of the invention

The present invention relates to an improved reflective bubble film insulating structures and a process for producing them.

### Background of the invention

Reflective bubble films are frequently used as thermal insulators in e.g. building elements due to their ability to reduce the radiant heat transfer between the building's interior and the ambient. Reflective bubble films are typically made of a core layer of plastic bubble film covered on one or both sides with a reflective (low emissivity) facing such as a suitable metallic foil or a suitable metallized surface of a film. In order to reduce the heat transfer through, for example, a building element (wall, roof, etc.). The facings are placed in a disposition so that their reflective surfaces delimit the air spaces within the said element. Used in this way they effectively reduce the radiant heat transmission through the said air spaces, causing them to act as thermal insulating layers.

Such thermal insulation has a disadvantage in that when the external metallic facing becomes covered by dust or becomes corroded by environmental moisture, its emissivity is greatly increased, and thus its overall insulating efficiency is reduced.

In order to attach the low emissivity facing in the known reflective bubble film structure it requires that one of its sides be coated with a suitable substance, e.g. a polymer such as polyethylene, that enables its binding to the plastic bubble film core layer. This coating greatly increases the emissivity of the material's surface, affecting its ability to reduce the radiant heat transmission through the internal air spaces comprised within the insulating structure.

U.S. Patent No. 5,549,956 to Handwerker describes heat reflective blankets useful for curing concrete, i.e. in another industry. Moreover, it proposes a layered structure including one or more heat reflective layers adjacent to bubble shaped insulative layers to allow for open spaces in front of the low emissivity surface of said reflective layers.

This structure suffers from a shortcoming in that the open spaces created in front of the reflective layer are not sealed to the ambient, thus allowing moisture to come into contact with the low emissivity surface and corrode it, consequently increasing its emissivity and adversely affecting the radiant heat insulating ability.

It has thus been desirable to obtain a structure, which overcome the drawbacks of the above structures i.e. protects the low emissivity surfaces from dust and corrosion, so as to maintain the thermal insulation they provide.

### Description of the invention

The present invention thus consists in a reflective bubble film structure in which at least one low emissivity surface is directly or indirectly attached to the open cell side of a bubble shaped layer resulting in airtight cells.

The resulting structure thus comprises many individually airtight cells, each one being delimited by a low emissivity surface which thus remains protected from dust and moisture.

The bubble shaped layer of the present invention may be made, e.g. of a plastic film. Advantageously the plastic film be thermo-formable to a bubble shaped layer and advantageously be heat sealable directly onto an adjacent low emissivity surface.

The plastic film may be constituted of a single polymer or of a blend of two or more polymers. Advantageously, the plastic film is a multi-layer film made of two or more layers. Each layer is constituted of a single polymer or a blend of two or more polymers and may have a different composition in respect to the other layers within the film.

The polymers constituting the plastic film or its layers or its blends may be selected among any suitable polyolefin, preferably polyethylene or any of its co-polymers or ter-polymers.

The plastic film that constitutes the bubble shaped layer may be treated on at least one side with e.g. corona treatment to enhance its heat-seal ability onto the low emissivity surface material.

In a preferred embodiment of the present invention, the plastic film that constitutes the bubble shaped layer has a two-layer structure comprising one layer of low-density polyethylene and another layer of ethyl-vinyl acetate co-polymer with 19% vinyl acetate content.

The low emissivity surface has advantageously an emissivity lower than 0.3, preferably lower than 0.1 and most preferably between 0.03 and 0.06.

The low emissivity surface may be, as indicated above, any suitable metallic foil (preferably an aluminum foil) or any suitable metallized surface of a film.

The metallized film is advantageously a metallized polypropylene film or a metallized polyester film.

In a further embodiment of the present invention there is provided, a reflective bubble film structure having two or more layers of the above low emissivity surface delimited bubble shaped layer.

The reflective bubble film structure of the present invention may have additional reflective (low emissivity) external facings on either one or both of its sides. Said external facings being attached to the reflective bubble film structure according to the present invention by means of a binding coating as in the known reflective bubble film structures. Said external facings not being protected from dust or corrosion as per the teaching of the present invention.

The reflective bubble film structure of the present invention may be produced utilizing, for example, a vacuum thermoforming bubble film machine, at which the plastic film is heated above its softening point to a temperature between 120°C and 195°C by machine's heating elements and formed into a bubble shaped layer by action of the machine's vacuum-forming drum operating at a line speed between 8 and 50 m/min. The low emissivity surface material is heated by another machine's heating elements to a temperature between 120°C and 220°C, brought into contact with the bubble shaped layer atop of the vacuum-forming drum and pressed onto it by the machine's press-on roll, by which action the low emissivity surface is heat-sealed to the open cell side of the bubble shaped layer, thus delivering a reflective bubble film structure as indicated by the present invention.

The reflective bubble film structure according to the present invention may also be produced by attaching at least one low emissivity surface by indirect means to the open cell side of a bubble shaped layer. Said indirect means may be, e.g. a glue, adhesive materials, etc.

A suitable heat lamination process may be used to assemble the reflective bubble film structure according to the present invention having two or more layers of the low emissivity surface delimited bubble shaped layer, as hereinabove produced.

A suitable heat lamination or extrusion coating lamination process may be used to assemble the reflective bubble film structure according to the present invention having additional reflective (low emissivity) external facing on either one or both sides, as hereinabove described.

The reflective bubble film structure prepared as described may be installed within a building element (façade, wall, floor, ceiling, roof, etc.) to enhance its thermal insulation properties.

The present invention is described herein with reference to buildings' structures and elements. However, it is not restricted to this purpose and might be used for other structures such as structures of cars, aircraft, trains, machines, etc.

The reflective bubble film structure according to the present invention may be used not only as an insulating structure as such but also for all structures comprising insulating structures.

The present invention will now be illustrated with reference to the accompanying drawings and example without being limited by same. (In said drawings identical parts appearing in several figures have been marked for the sake of clarity by the same numeral.)

### Figures

- Fig. 1: shows a schematic cross-sectional view of a reflective bubble film structure having low emissivity surface directly attached to the open cell side of a bubble shaped layer;
- Fig. 2: shows a schematic cross-sectional view of a reflective bubble film structure having multiple bubble shaped layers each one being delimited by a low emissivity surface;
- Fig. 3: shows a schematic crow-sectional view of a reflective bubble film structure having low emissivity surface delimited bubble shaped layer with additional external reflective facings; and
- Fig. 4: shows a partially broken pictorial illustration of a building structure employing the insulation of various embodiments as shown in Figs. 1 to 3. Said embodiments are shown in diverse building elements such as floor, wall and roof.

The above drawings show in detail:

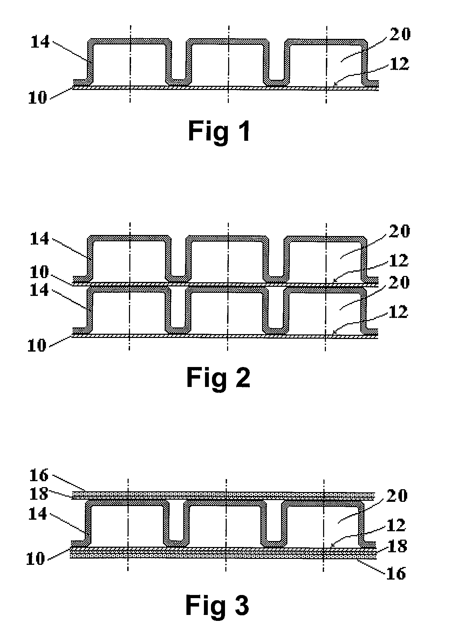

Fig. 1 shows a reflective bubble film structure being constituted by basis **10** on which is located low emissivity surface **12** directly attached to the open cell side of a bubble shaped layer **14.** Each airtight bubble **20** protects its delimiting low emissivity surface **12** from dust and moisture, thus preserving its thermal insulating efficiency.
Fig. 2 shows a reflective bubble film structure being constituted by two layers of the assembly described in Fig. 1.
Fig. 3 shows a reflective bubble film structure being constituted by the assembly described in Fig. 1 having additional reflective (low emissivity) external facings **16** as in the known reflective bubble film structures attached by means of binding coating layers **18.**

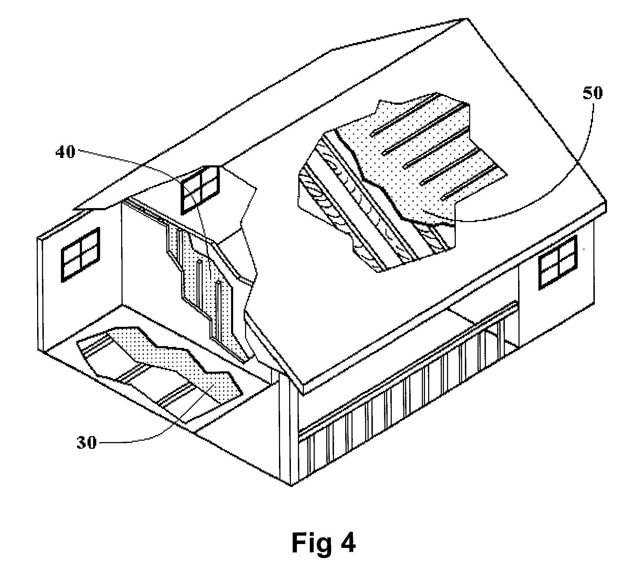

Fig. 4 illustrates a typical building structure including the thermal insulation assemblies of Figs. 1 to 3. The Figure shows an improved reflective bubble film insulating structure installed within floor **30,** a wall **40** and roof **50** respectively.

### Example

An improved reflective bubble film insulating structure according to the present invention may be prepared as follows:
A two-layer plastic film consisting of a layer of 0.02mm in thickness of low-density polyethylene and a layer of 0.07mm in thickness of ethyl-vinyl acetate co-polymer with 19% vinyl acetate content and being corona treated on the surface of the ethyl-vinyl acetate layer side, is heated above its softening point to 180°C by heating elements of a bubble film machine operated at a line speed of 23 m/min. Said heated plastic film be further vacuum thermo-formed into a bubble shaped layer by action of the bubble machine's forming drum. The ethyl-vinyl acetate layer of the plastic film facing towards the open cell side of its bubble shaped structure.

A low emissivity surface substrate consisting of a metallized polyester film, is heated by another heating elements of the same bubble film machine to 180°C, then its low emissivity surface is brought into contact with the bubble shaped layer atop of the machine's forming drum and heat-sealed onto the open cell side of the bubble shaped layer by the action of the machine's press-on roll, thus delivering an improved reflective bubble film structure according to the present invention. Said reflective bubble film structure is ejected from the forming drum, let to cool in ambient to under 60°C and further being wound into a roll by the machine's winding unit.

## Claims

1. A reflective bubble film insulating structure having a low emissivity surface directly or indirectly attached to the open cell side of a bubble shaped layer resulting in airtight cells.

2. Reflective bubble film insulating structure according to Claim 1, wherein the bubble shaped layer is made of a plastic film.

3. Reflective bubble film insulating structure according to Claim 2, wherein the plastic film is thermo-formable to a bubble shaped layer.

4. Reflective bubble film insulating structure according to Claim 2 or 3, wherein the plastic film is comprised of a single layer.

5. Reflective bubble film insulating structure according to Claim 2 or 3, wherein the plastic film is comprised of two or more layers.

6. Reflective bubble film insulating structure according to Claim 4 or 5, wherein said plastic film layer(s) is (are) comprised of a single polymer.

7. Reflective bubble film insulating structure according to Claim 4 or 5, wherein said plastic film layer (s) is (are) comprised of a blend of two or more polymers.

8. Reflective bubble film insulating structure according to Claim 6 or 7, wherein the polymer is a polyolefin.

9. Reflective bubble film insulating structure according to Claim 8, wherein the polyolefin is polyethylene or any of its co-polymers or ter-polymers.

10. Reflective bubble film insulating structure according to any of Claims 1 to 9, wherein the low emissivity surface is the surface of a metallic foil.

11. Reflective bubble film insulating structure according to Claim 10, wherein the metallic foil is an aluminium foil.

12. Reflective bubble film insulating structure according to any of Claims 1 to 9, wherein the low emissivity surface is a metallized surface of a polypropylene film.

13. Reflective bubble film insulating structure according to Claim 12, wherein the low emissivity surface is a metallized surface of a polyester film.

14. Reflective bubble film insulating structure according to any of Claims 1 to 13, having two or more layers of the above low emissivity surface delimited bubble shaped layer.

15. Reflective bubble film insulating structure according to any of Claims 1 to 14, wherein the low emissivity surface has an emissivity lower than 0.3, preferable lower than 0.1 and most preferably between 0.03 and 0.06.

16. Reflective bubble film insulating structure according to any of Claims 2 to 15, wherein the plastic film is directly heat-sealable to a low emissivity surface.

17. Reflective bubble film insulating structure, substantially as hereinbefore described, with reference to the accompanying Drawings and Example.

18. A process for producing a reflective bubble film insulating structure according to any of Claims 1 to 17, wherein a two layer plastic film is heated above its softening point to 180° C by heating elements of a bubble film machine operated at a line speed of 23 m/min, said heated plastic film be further vacuum thermo-formed into a bubble shaped layer by action of the bubble machine's forming drum, a low emissivity surface substrate being heated by another heating element of the same bubble film machine to 180° C, then its low emissivity surface being brought into contact with the bubble shaped layer atop of the machine's forming drum and heat-sealed onto the open cell side of the bubble shaped layer by the action of the machine's press-on roll, thus delivering an improved reflective bubble film structure, said reflective bubble film structure being ejected from the forming drum, let to cool in ambient to under 60° C and further being wound into a roll by the machine's winding unit.

19. Process according to Claim 18, wherein the plastic film has a layer of 0.02 mm in thickness of low-density polyethylene and a layer of 0.07 mm in thickness of ethyl-vinyl acetate co-polymer with 19% vinyl acetate content and being corona treated on the surface of the ethyl-vinyl acetate layer side, the ethyl- vinyl acetate layer of the plastic film facing towards the open cell side of its bubble shaped structure.

20. Process for producing a reflective bubble film insulating structure according to any of Claims 1 to 15, wherein one low emissivity surface is attached by indirect means to the open cell side of a bubble shaped layer.

21. Process according to Claim 20, wherein the indirect means are selected from a glue or an adhesive means.

22. Process for producing a reflective bubble film insulating structure substantially as hereinbefore described with reference to the annexed Drawings and Example.
